# EUROPÄISCHE PATENTSCHRIFT

(11) **EP 2 659 758 B1**
(45) Veröffentlichungstag und Bekanntmachung des Hinweises auf die Patenterteilung: **26.09.2018**
(21) Anmeldenummer: 13401043.8
(22) Anmeldetag: 22.04.2013
(51) Int. Cl.: A01B 3/421, A01B 15/14

(54) **Drehpflug**
Reversible plough
Charrue réversible

(30) Priorität: 04.05.2012 DE 102012103917
(43) Veröffentlichungstag der Anmeldung: 06.11.2013
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE); Warnecke, Christoph, 49152 bad Essen (DE)

(56) Entgegenhaltungen:
- EP-A1- 0 872 167
- EP-A2- 0 200 489
- DE-C1- 19 608 140

## Beschreibung

Die Erfindung bezieht sich auf einen Drehpflug gemäß dem Oberbegriff des Anspruches 1.

Drehpflüge, vielfach auch als Wendepflüge bezeichnet, mit auf gegenüberliegenden Seiten eines Pflugrahmens angeordneten Pflugscharreihen haben jeweils Pflugscharreihen, die auf der einen Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Für einen Wendevorgang über das Drehgestell an dem Anbaubock ist der Pflugrahmen über das erste Stellglied auszuschwenken und nach einem Wendevorgang in eine Arbeitsposition wieder einzuschwenken. Dies erfolgt über das erste Stellglied und die schwenkbar am Rahmen angelenkten Lenker.

Um verschiedenen Spurbreiten eines landwirtschaftlichen Schleppers berücksichtigen zu können, ist der Drehpflug auch auf unterschiedliche Schlepperspurweiten einzustellen. Darüber hinaus ist gefordert, dass auch die Arbeitsbreite des Pfluges einzustellen ist, was über das zweite Stellglied erfolgen kann.

Ein Drehpflug gemäß dem Oberbegriff des Patentanspruches 1 ist durch die EP 0 872 167 A1 bekannt. Bei diesem Drehpflug ist ein erstes Stellglied zum Ein- und Ausschwenken des Pflugrahmens durch zwei voneinander unabhängig betätigbare, mechanisch miteinander gekoppelte Einzelstellglieder, durch die jeweils unabhängig voneinander die Gesamtlänge des ersten Stellgliedes vom zum Ein- und Ausschwenken des Pflugrahmens veränderbar ist, bekannt. Die beiden Einstellglieder sind in hintereinander angeordneter Weise miteinander gekoppelt. Bei diesen beiden Einstellgliedern handelt es sich um zwei einfach hintereinander angeordnete und getrennt wirkende Einstellelemente. Die Kolbenstange des Hydraulikzylinders ist drehbar mit der ein Schraubgewinde aufweisenden Gewindehülse des Einstellelementes verbunden.

Ein Drehpflug der eingangs genannten Art ist aus der DE 10 2007 037 258 A1 bekannt. Dieser Drehpflug hat zwei parallele Lenker, die als Zugarm und als Stabilisator den Pflugrahmen mit dem Drehgestell verbindet. Über das erste Stellglied ist die Lage des Zugarmes relativ zum Vordergestell veränderbar, indem die Gesamtlänge dieses ersten Stellgliedes, das als Hydraulikzylinder ausgebildet ist, verändert werden kann.

Um unterschiedliche Schlepperspurweiten berücksichtigen zu können und um eine Änderung eines Furchenabstandes zwischen einer Furche und dem Hinterrad eines Schleppers einstellen zu können, ist vorgesehen, dass durch schwimmende Kolben innerhalb des ersten Stellgliedes als verstellbare Begrenzungen veränderbare Anschläge dargestellt werden können. Die die veränderbare Gesamtlänge des ersten Stellgliedes bestimmende Kolbenstange dieses ersten Stellgliedes fährt je nach gewünschter Gesamtstellgliedlänge im Hinblick auf die Schlepperspurweite oder im Hinblick auf den gewünschten Furchenabstand auf diese verstellbaren Anschläge, wodurch sich die Gesamtlänge der Kolbenstange verändern lässt.

Durch eine Verstellung der Anschläge kann die Gesamtlänge voreinstellbar verändert werden, so dass auch diese voreingestellte veränderte Gesamtlänge des Stellgliedes nach einem Wendevorgang wieder angefahren werden kann. Dazu ist ein Hydrauliksteuergerät vorhanden, das auf hydraulischem Wege die Anschläge verstellt.

Nachteilig hierbei ist, dass das Ein- und Ausschwenken des Pflugrahmens und die Einstellung der Schlepperspurweite durch ein- und dieselbe Kolbenstange des ersten Stellgliedes erfolgen muss. Des Weiteren ist nachteilig, dass nach jedem Wendevorgang die schwimmenden Kolben als Anschlagbegrenzungen für die Kolbenstange erheblichen mechanischen Belastungen ausgesetzt sind , was im rauen Alltagsbetrieb eines derartigen Drehpfluges zu Verschleißerscheinungen und auch zu Ungenauigkeiten im hydraulischen Steuersystem führen kann mit der Folge, dass kein befriedigendes Pflugergebnis zu erzielen ist. Problematisch ist das selbständige Verstellen der Schwimmkolben durch Druckschwankungen bzw. Undichtigkeiten im Hydrauliksystem während des laufenden Betriebes.

Es ist daher Aufgabe der vorliegenden Erfindung, einen Drehpflug der eingangs genannten Art dahingehend zu verbessern, dass ein Ein- und Ausschwenken des Pflugrahmens, eine Schlepperspurweiteneinstellung und eine Arbeitsbreitenverstellung auf einfache Weise ermöglicht ist mit Teilen, die einem verminderten Verschleiß ausgesetzt sind.

Zur Lösung dieser Aufgabe zeichnet sich der Drehpflug der eingangs genannten Art durch die kennzeichnenden Merkmale des Anspruches 1 aus.

Damit ist ein Drehpflug geschaffen, bei der zunächst eines der beiden Einzelstellglieder dazu benutzt wird, um den Pflugrahmen ein- und auszuschwenken. Das andere Einzelstellglied ist dabei vorzugsweise nicht zu betätigen, so dass es seine Lage beibehalten kann. Aufgrund der Betätigung des anderen Einzelstellgliedes lässt sich jedoch schon durch Betätigung dieses Einzelstellgliedes die Gesamtlänge des ersten Stellgliedes verändern. Parallel oder unabhängig davon kann jedoch auch das anderen Einzelstellglied betätigt werden, womit ohne Betätigung des anderen Einstellgliedes ebenfalls die wirksame Gesamtlänge des ersten Stellgliedes verändert werden kann.

Zusätzlich kann die Gesamtlänge auch durch Betätigung beider Einzelstellglieder verändert werden. Dies kann dahingehend genutzt werden, dass eines der Einzelstellglieder für den Ein- und Ausschwenkvorgang genutzt wird und dass die Schlepperspurweite durch die Betätigung eines anderen Einzelstellgliedes, das nicht für den Ein- und Ausschwenkvorgang sorgt, die Gesamtlänge des ersten Stellgliedes so verändert, dass der Pflugrahmen an die erforderliche Schlepperspur im Sinne einer Vergrößerung oder Verkleinerung der Schlepperspurweiteneinstellung angepasst werden kann. Somit kann beispielsweise die Schlepperspurweiteneinstellung als Grundeinstellung durch eines der beiden Einzelstellglieder vorgenommen werden, wohingegen das andere Einzelstellglied für das Ein- und Ausschwenken verantwortlich ist. Mechanische Beanspruchungen beim Wendevorgang sind daher erheblich reduziert.

Bevorzugtermaßen erfolgt dies, indem die beiden Einzelstellglieder als doppeltwirkende Hydraulikzylinder ausgebildet sind, die jeweils ein Zylindergehäuse aufweisen, an denen eine Gelenkaugenverbindung am Pflugrahmen und eine Verbindung zu dem Anbaubock bzw. zu den entsprechenden vorgesehenen Lenkern oder Teilen, die mit Lenkern in Verbindung stehen, angebaut ist. Mit den Zylindern der Einzelstellgliedern wirkt erfindungsgemäß eine gemeinsame Kolbenstange zusammen, zu der die jeweiligen Zylindergehäuse mit den angebrachten Verbindungsgelenkaugen relativ nach entsprechender Betätigung der doppeltwirkenden Hydraulikzylinder verstellt werden. Die gemeinsame Kolbenstange ist Koppelglied der beiden Hydraulikzylinder. Die entsprechenden Zylindergehäuse können nicht nur eine Relativbewegung zu dieser gemeinsamen Kolbenstange ausführen, sondern es kann auch eine Relativbewegung zwischen den beiden Zylindergehäusen der Einzelstellglieder stattfinden. Somit kann über diese Verstellung der Einzelzylindergehäuse mit den entsprechenden Verbindungsgelenkaugen unabhängig voneinander die Gesamtlänge des ersten Stellgliedes verändert werden.
Bevorzugtermaßen wird das Einzelstellglied, also vorzugsweise der doppelt wirkende Hydraulikzylinder, der für die Anpassung der Schlepperspurweite sorgt, mit dem zweiten Stellglied verbunden sein, also in aller Regel über eine hydraulische Kopplung. Dieses zweite Stellglied ist auch bevorzugtermaßen als doppeltwirkender Zylinder ausgebildet, bei dem jedoch die ein Verbindungsgelenkauge tragende Kolbenstange relativ zu einem Zylindergehäuse bewegbar und aus diesem ausgefahren bzw. in dieses eingefahren werden kann. Mit diesem dritten Hydraulikzylinder als zweitem Stellglied kann z.B. die Arbeitsbreite angepasst werden, indem der Pflugrahmen um eine vertikale Achse verschwenkt wird. Das Einzelstellglied zum Ein- und Ausschwenken des Pflugrahmens kann bei Betätigung bevorzugtermaßen zwischen zwei Endstellungen bewegt werden für den jeweiligen Ein- und Ausschwenkvorgang, so dass es nicht bei unterschiedlich eingestellten Schlepperspurweiteneinstellungen gegen irgendwelche mechanisch beanspruchte Anschläge fahren muss. Die Spurweiteneinstellung kann über den weiteren Hydraulikzylinder als Einzelstellglied erfolgen, was ebenfalls auf hydraulischem Wege in einfacher Art und Weise realisiert werden kann. Anstelle von Hydraulikzylindern können jedoch auch andere Stellglieder wie Pneumatikzylinder, sonstige Antriebe, verfahrbare Zahnstangenelemente und dgl. mehr Einsatz finden.

Weitere vorteilhafte Ausgestaltungen der Erfindung ergeben sich aus weiteren Unteransprüchen, der nachfolgenden Beschreibung. In der Zeichnung zeigen:
- Fig. 1.: eine Draufsicht auf ein Ausführungsbeispiel eines Drehpfluges nach der Erfindung;
- Fig. 2: das Ausführungsbeispiel nach Fig. 1 mit in Arbeitsposition befindlichem Pflugrahmen (durchgezogene Linien) und in der Position des Pfluges vor einem Wendevorgang (gestrichelte Linien);
- Fig. 3: einen Schaltplan für ein Ausführungsbeispiels eines hydraulischen Systems für das Ausführungsbeispiel des Drehpfluges nach Fig. 2;
- Fig. 4: das Ausführungsbeispiel nach Fig. 1 bei einer kleineren Arbeitsbreite (durchgezogene Linien) und bei einer größeren Arbeitsbreite (gestrichelte Linien);
- Fig. 5: den Schaltplan eines Ausführungsbeispiels eines Hydrauliksystems für das Ausführungsbeispiel nach Fig. 4;
- Fig. 6: das Ausführungsbeispiel nach Fig. 1 mit einer Einstellung auf eine kleinere Schlepperspurweite (durchgezogene Linien) und mit einer Einstellung auf eine größere Schlepperspurweite (gestrichelte Linien);
- Fig. 7: den Schaltplan eines Ausführungsbeispiels eines Hydrauliksystems für das Ausführungsbeispiel des Drehpfluges nach Fig. 6.

In der Zeichnung sind grundsätzlich übereinstimmende Teile mit übereinstimmenden Bezugsziffern versehen.

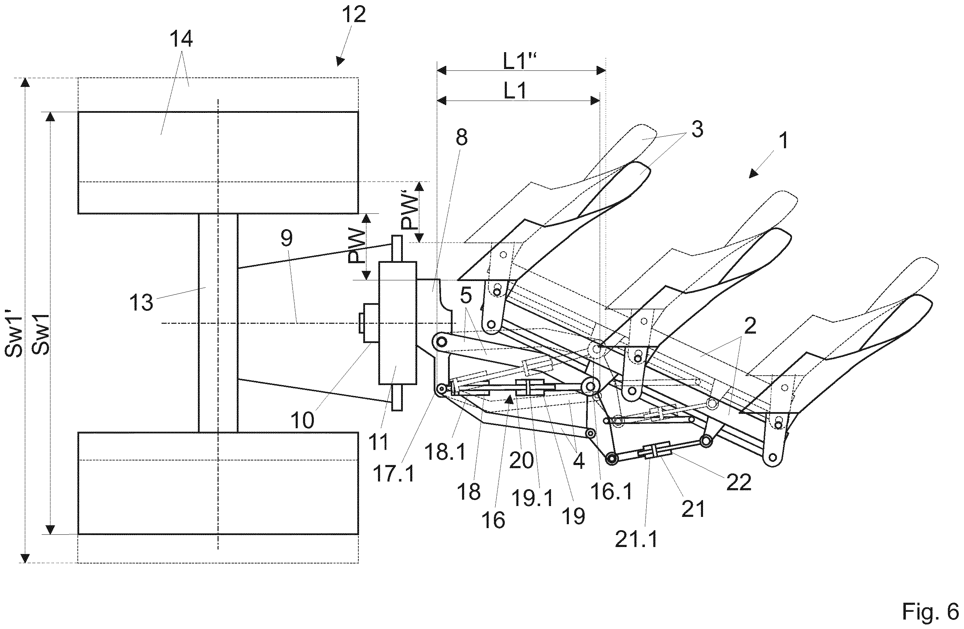

Allgemein mit 1 ist der Drehpflug beziffert mit einem Pflugrahmen 2, in dem eine obere Reihe von Pflugscharen 3 und eine nicht sichtbare untere Reihe von Pflugscharen angebracht ist. Der Pflugrahmen 2 ist über im w
Wesentlichen parallel ausgerichtete Lenker 4 und 5 sowie über Querlenker bzw. Zwischenlenker 5 und 7 mit einem Drehgestell 8 verbunden, das über eine Schwenkwelle um die Schwenkachse 9 verschwenkt bzw. verdreht werden kann und insofern verdrehbar in einem Schwenklager 10 des Anbaubockes 11 abgestützt ist. Der Anbaubock 11 ist über Oberlenker und Unterlenker mit einem landwirtschaftlichen Schlepper 12 verbunden, der eine Hinterachse 13 sowie Hinterräder 14 aufweist. Der äußere Abstand der Hinterräder bestimmt die Spurweite SW (Fig. 6) des landwirtschaftlichen Schleppers 12.

Die Lenker 4 und 5 und die Querlenker 6 und 7 sind gelenkig aneinander befestigt und bilden insgesamt ein Schwenkparallelogramm. Am hinteren Gelenk 15, an dem der Lenker 5 am Rahmen 2 angelenkt ist und an dem auch der Querlenker bzw. Zwischenlenker 6 gelenkig angreift, ist ebenfalls ein allgemein mit 16 beziffertes erstes Stellglied angelenkt mit einem Gelenkauge 16.1, das gegenüberliegend an dem Gelenk 17 des Lenkers 4 bzw. des Querlenkers 7 mit dem dortigen Gelenkauge 17.1 angreift.

Dieses erste Stellglied 16 besteht aus einem Einzelstellglied 18 und einem weiteren Einzelstellglied 19, die eine gemeinsame Kolbenstange 20 haben. Die Einzelstellglieder 18 und 19 sind jeweils als doppelwirkender Hydraulikzylinder ausgebildet, wobei die gemeinsame Kolbenstange 20 mit den darin fest angeordneten Kolbenelementen 20.1 und 20.2 abgestützt ist. Die Gehäuse 18.1 bzw. 19.1 sind relativ beweglich zu der gemeinsamen Kolbenstange 20 verstellbar ausgebildet und zwar dergestalt, dass jedes einzelne Zylindergehäuse 18.1 bzw. 19.1 unabhängig voneinander relativ zur gemeinsamen Kolbenstange 20 bewegt werden kann. Die Gelenkaugen 16.1 und 17.1 sind an den Zylindergehäusen 18.1 bzw. 19.1 befestigt über eine jeweilige stangenförmige Verbindung, so dass das Auge 16.1 bzw. 17.1 bei einer Verstellbewegung des Zylindergehäuses 18.1 bzw. 19.1 gegenüber den Kolbenelementen 20.1 bzw. 20.2 ebenfalls verstellt wird. Die Gesamtlänge L1 des Stellgliedes 16 wird daher durch die jeweilige Stellung gegenüber den Kolbenelementen 20.1 und 20.2 bzw. der Kolbenstange 20 des verstellbaren Zylindergehäuses 18.1 bzw. 19.1 durch den Maximalabstand der Augen 16.1 und 17.1 bestimmt und ist mithin durch die beiden doppelt wirkenden Hydraulikzylinder als Einzelstellglieder 18 und 19 des ersten Stellgliedes 16 zu verändern.

Des Weiteren ist ein zweites Stellglied 21 vorgesehen, das an dem Quer- bzw. Zwischenlenker 6 gelenkig angreift und ebenfalls gelenkig mit dem Pflugrahmen 2 verbunden ist. Darüber lassen sich der Pflugrahmen 2 um das Gelenk 15 zwecks Veränderung der Arbeitsbreite des Pfluges 1 verschwenken. Auch dieses zweite Stellglied ist als doppeltwirkender Hydraulikzylinder ausgebildet mit einer Kolbenstange 22, die aus dem Zylindergehäuse 21.1 des Hydraulikzylinders 21 ein- und auszufahren ist mit einer damit zusammenhängenden Verschwenkung des Pflugrahmens 2 um die Achse des Gelenkes 15.

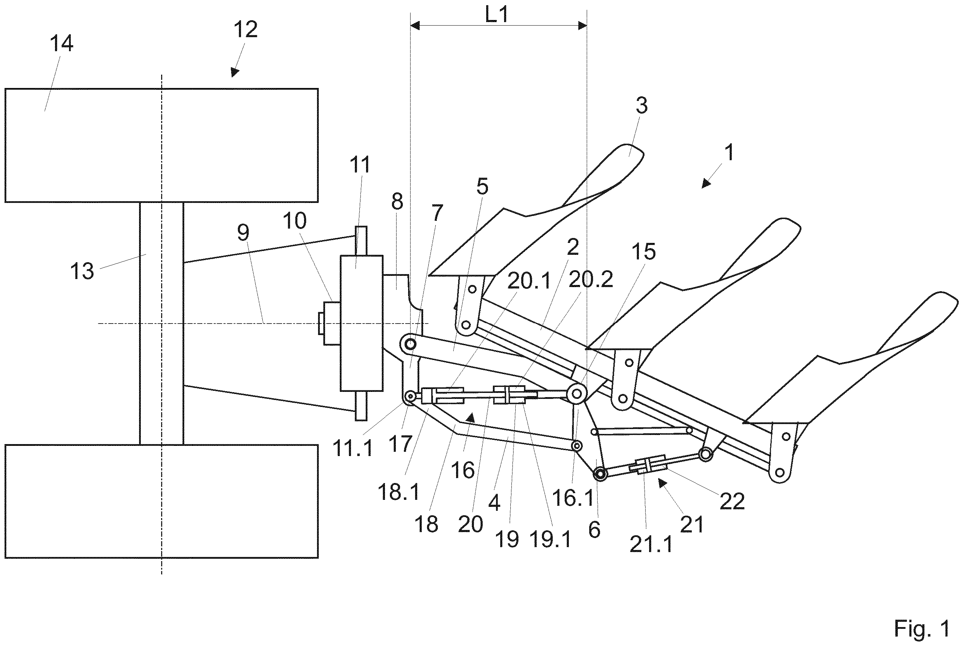

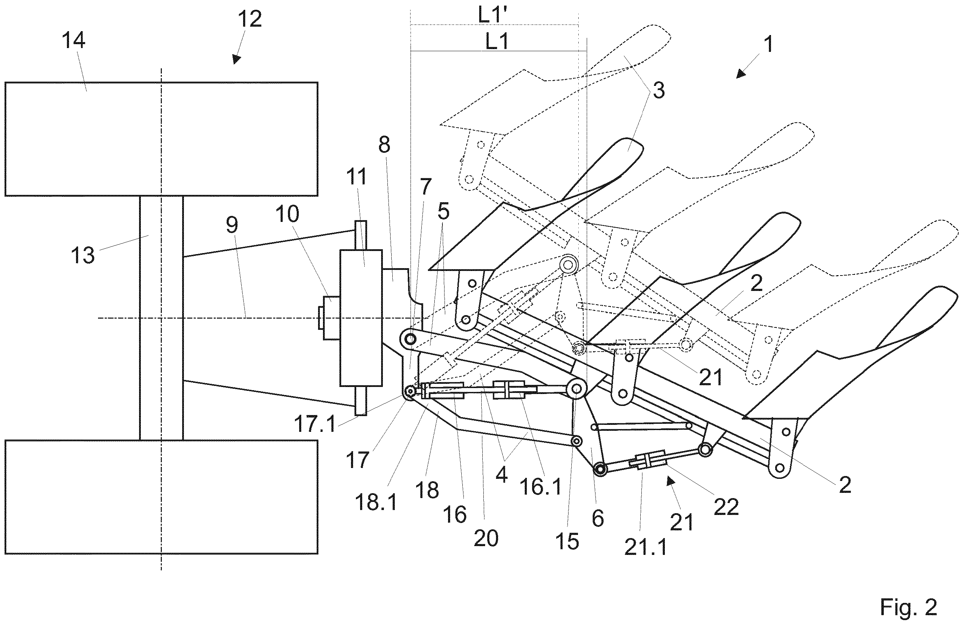

In Fig. 2 sind die Teile des Ausführungsbeispiels nach Fig. 1 gezeichnet und zwar einmal mit den durchgezogenen Linien in der Stellung, in der sich der Pflug 1 in seiner Arbeitsstellung befindet. Dies entspricht einem eingeschwenkten Zustand des Pfluges 1. Mit gestrichelten Linien ist dargestellt, wenn sich der Pflug 1 in einer ausgeschwenkten Stellung befindet. Dies ist eine Stellung des Pfluges 1, die der Pflugrahmen 2 einnimmt, wenn er gewendet bzw. gedreht werden soll. Die gestrichelte Darstellung entspricht daher der Position des Pflugrahmens kurz vor einem Wende- bzw. Drehvorgang.

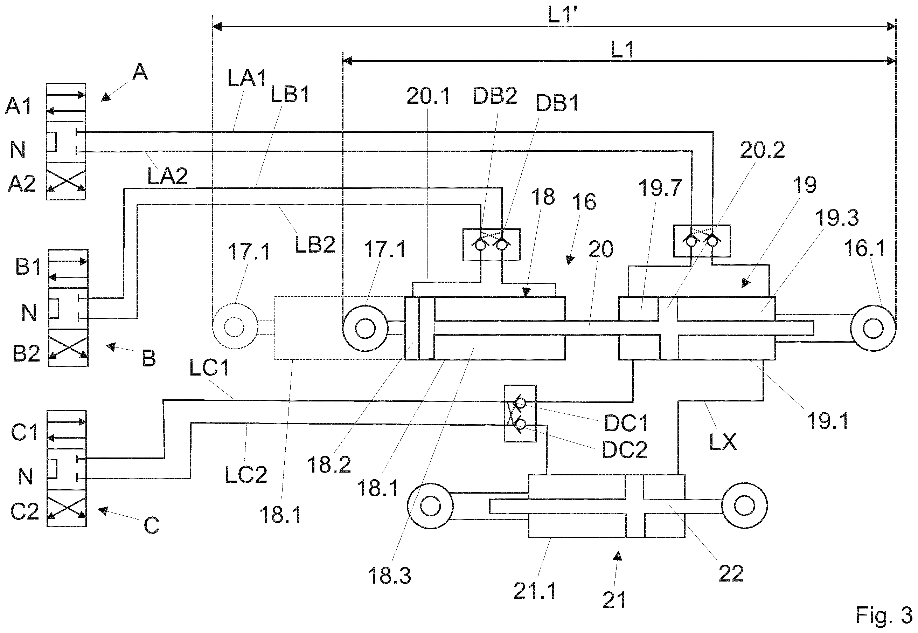

In Fig. 3 ist dazu ein Schaltplan wiedergegeben mit Darstellung der Teile des ersten Stellgliedes 4, 16 mit den beiden Hydraulikzylindern als Einzelstellglieder 18, 19 und der Darstellung des zweiten Stellgliedes 21, also des Hydraulikzylinders. Gestrichelt ist wiederum das Einzelstellglied 18, also der Hydraulikzylinder, des Ausführungsbeispiels nach Fig. 1 dargestellt in der Lage der Teile, wie sie eingenommen sind in der gestrichelten Stellung des Pflugrahmens nach Fig. 2 kurz vor dem Wendevorgang.

Soll der Pflugrahmen 2 aus der in Fig. 2 mit durchgezogenen Linien dargestellten Position in die mit gestrichelten Linien dargestellte Position gebracht werden, wird das Hydraulikventil B aus der Nullstellung N in die Schaltstellung B2 geschaltet. Hierdurch wird die Hydraulikleitung LB2 mit Druck beaufschlagt. Das Druckmedium kann über die Hydraulikleitung LB2 und das entsperrbare Druckbegrenzungsventil DB2 in den Druckraum 18.2 des Hydraulikzylinders 18 gelangen. Der andere Druckraum 18.3 des Hydraulikzylinders 18 ist über das Druckbegrenzungsventil DB1 an die Hydraulikleitung LB1 angeschlossen. Die gemeinsame Kolbenstange 20 des Hydraulikzylinders 18 und des Hydraulikzylinders 19 ist unbeweglich am Pflugrahmen 2 gehalten, so dass sich nach Druckbeaufschlagung des Druckraumes 18.2 das Zylindergehäuse 18.1 in der Darstellung nach Fig. 3 nach links bewegt in die gestrichelte Liniendarstellung und zwar zusammen mit dem Gelenkauge 17.1. Dadurch hat sich die Gesamtlänge des ersten Stellgliedes von L1 auf L1' verändert. Die einzelnen Teile haben die strichpunktierte Lage eingenommen, so dass der Lenker 5, der Lenker 4, der Zwischenlenker 6 und der Pflugrahmen 2 mitsamt den an ihnen festgelegten Teilen unter Einschluss des ersten Stellgliedes 6 und des zweiten Stellgliedes 21 verschwenkt worden sind und zwar in die Stellung, die für einen nachfolgenden Wendevorgang eingenommen werden soll.

Das Zylindergehäuse 18.1 kann dabei so verfahren werden, dass es in der in Fig. 3 gezeigten Lage mit seinem dem Lenkerauge 17.1 abgewandten Ende an dem Kolbenelement 20.1 anliegt. Das im Druckraum 18.3 befindliche Druckmedium kann über das entsperrbare Rückschlagventil DB1 über die Hydraulikleitung LB1 zurückfließen.

Ist im umgekehrten Fall der Pflugrahmen 2 aus der in Fig. 2 mit gestrichelten Linien dargestellten Position (Wendestellung) in die mit durchgezogenen Linien dargestellte Position für die Arbeitsstellung des Pflugrahmens 2 zum Pflügen zu bringen, wird das Hydraulikventil B aus der Nullstellung N in die Schaltposition B1 geschaltet. Hierdurch wird die Hydraulikleitung LB1 mit dem Druckmittel beaufschlagt, so dass das Druckmittel über das Druckbegrenzungsventil DB1 in den Druckraum 18.3 gelangt. Das Zylindergehäuse 18.1 wird bei dieser Druckbeaufschlagung in Richtung auf den Hydraulikzylinder 19 zubewegt und wieder in die Position verfahren, wie sie mit den durchgezogenen Linien in Fig. 3 dargestellt ist, so dass sich die Gesamtlänge L1 des ersten Stellgliedes 16 wieder eingestellt hat.

Es ist möglich, die Schaltung des Hydraulikventils B zweckmäßigerweise mit einer nicht dargestellten, jedoch bekannten Folgeschaltung für den Drehzylinder des Drehgestells 8 zum Wenden bzw. Drehen des Pflugrahmens 2 um die Schwenkachse zu kombinieren.

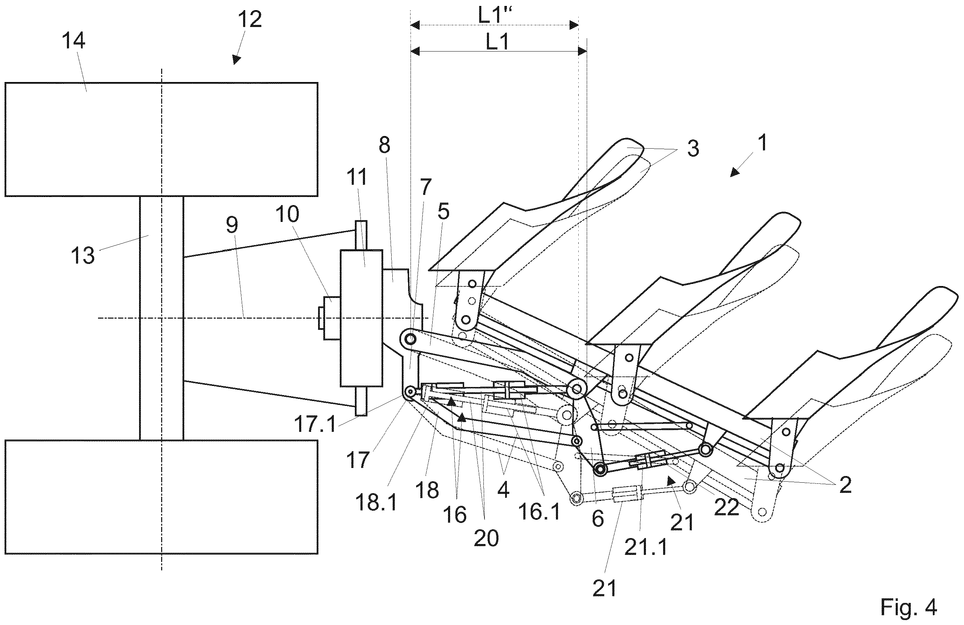

In Fig. 4 ist das Ausführungsbeispiel eines Drehpfluges nach der Erfindung mit durchgezogenen Linien in einer Position gezeigt, wenn der Pflugrahmen 2 sich in einer Arbeitsposition befindet, die einer kleinen Arbeitsbreite beim Pflügen entspricht.

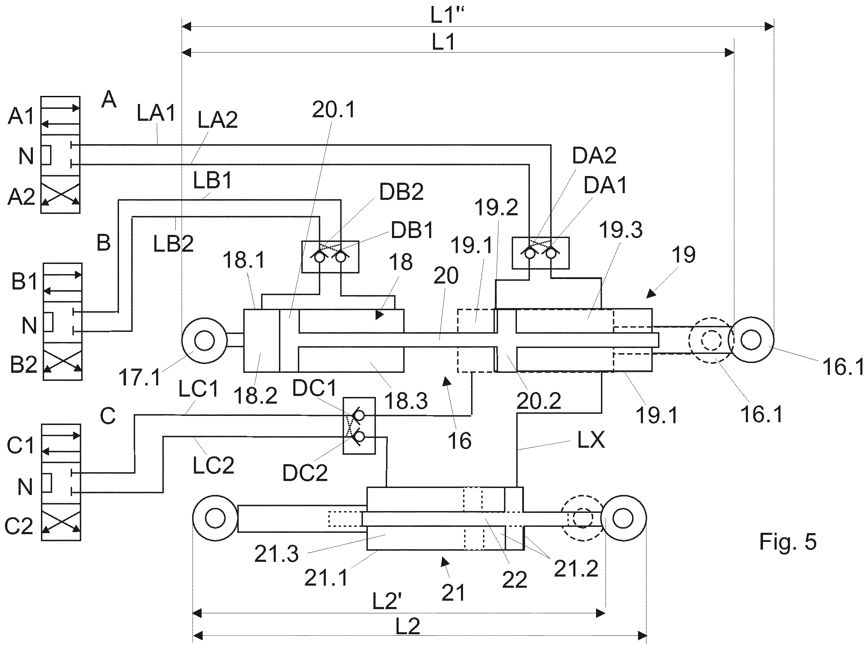

Mit gestrichelten Linien ist in Fig. 4 dargestellt, wenn der Pflugrahmen 2 auf eine größere Arbeitsbreite beim Pflügen verstellt worden ist. Dazu wird, wie dies der Schaltplan eines Ausführungsbeispiels eines Hydrauliksystems nach Fig. 5 veranschaulicht, die Gesamtlänge des ersten Stellgliedes 16 mit den beiden Hydraulikzylindern 18 und 19 von der Gesamtlänge L1 (Fig. 4) auf die Gesamtlänge L1" des ersten Stellgliedes 16 (Fig. 4) verstellt. Diese Verstellung von Llauf L1" verdeutlicht die Darstellung nach Fig. 5. Dazu wird das Hydraulikventil C aus der Nullstellung N kommend in die Schaltposition C1 geschaltet. Das unter Druck stehende Druckmedium gelangt über die Druckleitung LC1 und das entsperrbare Rückschlagventil DC1 in den Druckraum 19.2, der dem Druckraum 19.3 am Kolbenelement 20.2 der gemeinsamen Kolbenstange 20 im Hydraulikzylinder 19 als zweitem Einzelstellglied gegenüberliegt, so dass das Zylindergehäuse 19.1 des Hydraulikzylinders 19 aus der mit durchgezogenen Linien in Fig. 5 dargestellten Position in die gestrichelt dargestellte Position verschoben wird mit einer entsprechenden Verlagerung des Gelenkauges 16.1, so dass aus der ursprünglichen Gesamtlänge L1 des ersten Stellgliedes 16 die Gesamtlänge L1" wird. Aus dem Druckraum 19.3 wird das Druckmedium über die Leitung LX in die Kammer 21.2 des Hydraulikzylinders 21 geschoben, so dass die Kolbenstange des doppelt wirkenden Hydraulikzylinders 21 in die mit gestrichelten Linien dargestellte Position verschoben wird mit einer Verkürzung der Länge L2 auf L2' (Fig. 5). Durch die gemeinsame Verstellung der Hydraulikzylinder 19 und 21 lässt sich so eine größere Arbeitsbreite einstellen, wie diese in Fig. 4 mit den gestrichelten Linien veranschaulicht ist. Beide Hydraulikzylinder 19 und 21 sind daher durch diesen Verstellvorgang verkürzt worden.

Umgekehrt ist der Pflugrahmen 2 aus der in den Fig. 4 und 5 mit gestrichelten Linien dargestellten Position mit größerer Arbeitsbreite des Pflugrahmens 2 auf eine kleinere Arbeitsbreite des Pflugrahmens 2 einzustellen, um wiederum die mit durchgezogenen Linien dargestellte Position für eine kleinere Arbeitsbreite zu erreichen. Dazu wird das Hydraulikventil C aus der Nullstellung N in die Position C2 geschaltet, so dass das unter Druck stehende Druckmedium in die Druckkammer 21.3 des Hydraulikzylinders 21 fließt. Dadurch wird der Kolben 22 in die mit durchgezogenen Linien verschobene Position verschoben. Hierdurch drückt der Kolben 22 das Druckmittel aus der Kammer 21.2 über die Leitung LX in die Kammer 19.3, wodurch der Hydraulikzylinder 19 in die mit durchgezogenen Linie dargestellte Position mit kleinerer Arbeitsbreite auseinandergefahren wird. Durch die gemeinsame Verstellung der Hydraulikzylinder 21 und 19 lässt sich so eine kleinere Arbeitsbreite einstellen. Die Hydraulikzylinder 21 und 19 werden somit durch Ausfahren verlängert.

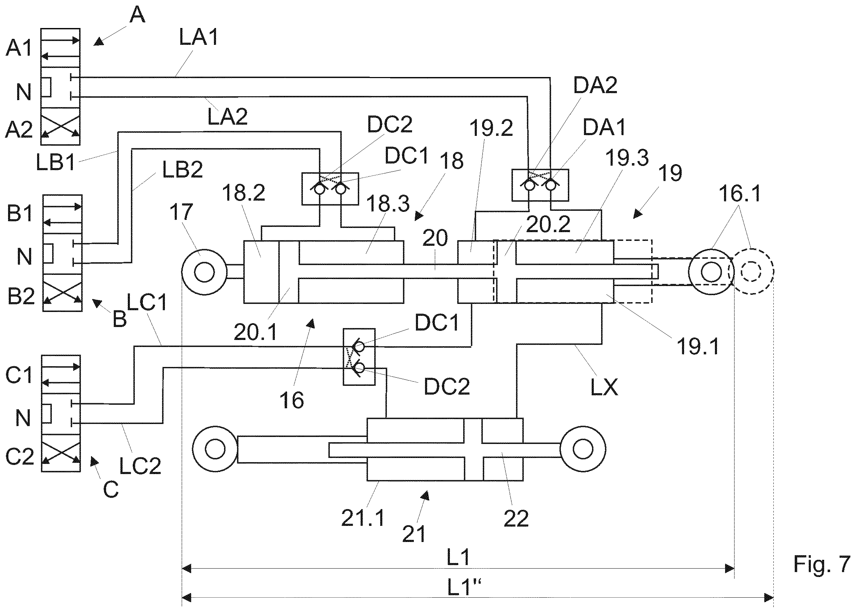

Haben die landwirtschaftlichen Schlepper unterschiedliche Spurweiten, wie dies durch durchgezogene Linien mit SW1 und gestrichelte Linien mit SW1' in Fig. 6 angedeutet ist, ist die Schlepperspurweite am Pflug (von PW in Fig. 6 auf PW') einzustellen. Dadurch verändert sich auch die Gesamtlänge L1 auf L1", wie dies in Fig. 6 und im Übrigen auch in Fig. 7 anhand des Schaltplans für ein Hydrauliksystem dargestellt ist. Dabei gelangt das erste Stellglied 16 aus der mit durchgezogenen Linien gezeigten Gesamtlänge L1 in die mit gestrichelten Linien gezeigte Gesamtlänge L1" mit der Verlagerung des Zylindergehäuses 19.1 aus der mit durchgezogenen Linien gezeigten Position in die mit gestrichelten Linien gezeigte Position mit Verlängerung der Position des Gelenkauges 16.1. Über diese Möglichkeit wird die Grundeinstellung auf die Einstellung der Spurweite SW1 bzw. SW1' der Hinterräder 14 des Schleppers 12 ermöglicht. Weiter lässt sich über diese Einstellung auch die Schnittbreite des ersten Pflugkörpers 3 während des Pflügens anpassen.

Wenn der Pflug 1 gemäß der Darstellung nach Fig. 6 und 7 aus der mit durchgezogenen Linien dargestellten Position für eine kleinere Spurweite SW1 des Schleppers (Fig. 6) auf eine größere Schlepperspur SW1' (Fig. 6) einzustellen ist, wird über das Hydraulikventil A aus der Nullstellung N in die Position A1 geschaltet. Hierdurch fließt über die Leitung L1 unter Druck stehendes Druckmedium, also beispielsweise Hydrauliköl, über das entsperrbare Rückschlagventil DA1 in die Druckkammer 19.3 des Hydraulikzylinders 19. Über das Kolbenelement 20.2 fährt dann das Zylindergehäuse 19.1 in die gestrichelt dargestellte Position mit Verlagerung des Gelenkauges 16.1 aus der mit L1 dargestellten Gesamtlänge des ersten Stellgliedes 16 in die mit gestrichelten Linien dargestellte Gesamtlänge L1" des ersten Stellgliedes. Das Druckmittel wird über die Leitung LA2 bei dieser Verstellung in die Hydraulikanlage zurückgedrückt.

Umgekehrt wird bei einer Verkleinerung der Schlepperspurweite von SW1' auf SW1 das Hydraulikventil A in die Position A2 geschaltet. Dabei fließt über die Leitung LA2 unter Druck stehendes Druckmedium in die Kammer 19.2 des Hydraulikzylinders 19, wobei über das Kolbenelement 20.2 und das Zylindergehäuse 19.1 letzteres verlagert wird in die mit durchgezogenen Linien dargestellte Position, wonach sich das Gelenkauge 16.1 aus der gestrichelt dargestellten Position in die mit durchgezogenen Linien dargestellte Position verstellt mit einer Verkürzung der Gesamtlänge L1" des ersten Stellgliedes 16 auf die Länge L1.

## Patentansprüche

1. Drehpflug (1) mit einem über Lenker (4, 5) und ein Drehgestell (8) an einem Anbaubock (11) zur Verbindung des Drehpfluges (1) mit einem landwirtschaftlichen Schlepper (12) dreh- und/oder schwenkbar abgestützten Pflugrahmen (2) und mit auf gegenüberliegenden Seiten des Pflugrahmens (2) angeordneten Pflugscharreihen (3), so dass durch eine Dreh- und/oder Schwenkbewegung des Pflugrahmens (2) wahlweise die eine oder die andere Pflugscharreihe (3) in ihre Betriebsstellung oder ihre Außerbetriebsstellung zu überführen ist, wobei zum Ein- und Ausschwenken des Pflugrahmens (2) mit den Lenkern (4, 5) ein erstes Stellglied (16) und zum Verschwenken des Pflugrahmens (2) gegenüber zumindest einem Lenker (4, 5) ein zweites Stellglied (21) vorgesehen ist, dass das erste Stellglied (16) zum Ein- und Ausschwenken des Pflugrahmens (2) zwei voneinander unabhängig betätigbare, mechanisch miteinander gekoppelte Einzelstellglieder (18, 19) umfasst, durch die jeweils unabhängig voneinander die Gesamtlänge (L1, L1', L") des ersten Stellgliedes (16) zum Ein- und Ausschwenken des Pflugrahmens (2) veränderbar ist **dadurch gekennzeichnet, dass** das erste Stellglied (16) zum Ein- und Ausschwenken des Pflugrahmens (2) eine den mechanisch miteinander gekoppelten Einzelstellgliedern (18, 19) zugeordnete gemeinsame Kolbenstange (20) aufweist, die mit zwei unabhängig voneinander verstellbaren Stellelementen (18,1, 19.1)zur Veränderung der Gesamtlänge (L1, L1', L1") des ersten Stellgliedes (16) zusammenwirkt.

2. Drehpflug nach Anspruch 1, **dadurch gekennzeichnet, dass** das erste Stellglied (16) doppeltwirkende Zylinder als Einzelstellglieder (18, 19) aufweist.

3. Drehpflug nach Anspruch 2, **dadurch gekennzeichnet, dass** die doppeltwirkenden Zylinder als doppeltwirkende Hydraulikzylinder ausgebildet sind.

4. Drehpflug nach Anspruch 2 oder 3, **dadurch gekennzeichnet, dass** die Kolben der doppeltwirkenden Hydraulikzylinder über die gemeinsame Kolbenstange (20) mechanisch miteinander gekoppelt sind.

5. Drehpflug nach Anspruch 1 und einem der Ansprüche 2 bis 4, **dadurch gekennzeichnet, dass** die relativ zu der Kolbenstange (20) beweglichen Stellelemente (18.1, 19.1) der Einzelstellglieder als Zylindergehäuse ausgebildet sind.

6. Drehpflug nach einem der Ansprüche 3 bis 5, **dadurch gekennzeichnet, dass** die doppeltwirkenden Hydraulikzylinder als Einzelstellglieder (18, 19) jeweils sich zu beiden Seiten eines Kolbenelementes (20.1, 20.2) der gemeinsamen Kolbenstange (20) innerhalb des Hydraulikzylinders erstreckenden Druckräume (18.2., 18.3; 19.2, 19.3) jeweils aufweisen, die jeweils einen Druckmittelanschluss haben.

7. Drehpflug nach einem der Ansprüche 1 bis 6, **dadurch gekennzeichnet, dass** eines der Einzelstellglieder (19) gekoppelt ist mit dem zweiten Stellglied (21).

8. Drehpflug nach Anspruch 7, **dadurch gekennzeichnet, dass** eines der Einzelstellglieder (19) mit dem zweiten Stellglied (21) hydraulisch gekoppelt ist.

9. Drehpflug nach einem der Ansprüche 1 bis 8, **dadurch gekennzeichnet, dass** eines der Einzelstellglieder (18) zum Ein- und Ausschwenken des Pflugrahmens (2) und das andere Einzelstellglied (19) zur Einstellung auf eine kleinere oder größeren Schlepperspurweite des Pflugrahmens (2) vorgesehen ist.

10. Drehpflug nach Anspruch 9, **dadurch gekennzeichnet, dass** das zur Einstellung einer kleineren oder größeren Schlepperspurweite vorgesehene Einzelstellglied (19) mit dem zweiten Stellglied (21) derart gekoppelt ist, dass durch eine gemeinsame Verstellung des zweiten Stellgliedes (21) und des mit diesem gekoppelten Einzelstellgliedes (19) eine größere oder eine kleinere Arbeitsbreite einstellbar ist.

11. Drehpflug nach einem der Ansprüche 1 bis 10, **dadurch gekennzeichnet, dass** die als Hydraulikzylinder ausgebildeten Einzelstellglieder (18, 19) und das als Hydraulikzylinder ausgebildete zweite Stellglied (21) als jeweils doppeltwirkende Hydraulikzylinder jeweils zwei Druckmittelanschlüsse für Druckraum (18.1, 18.2, 19.1, 19.2) aufweisen, die von entsperrbaren Rückschlagventilen (DA1, DA2, DB1, DB2, DC1, DC2) beherrscht sind.

## Claims

1. Reversible plough (1) with a plough frame (2) which is supported rotatably and/or pivotably via links (4, 5) and a bogie (8) on a headstock frame (11) for connecting the reversible plough (1) to an agricultural tractor (12), and with rows of ploughshares (3) which are arranged on opposite sides of the plough frame (2) such that, by means of a rotational and/or pivoting movement of the plough frame (2), either the one or the other row of ploughshares (3) can be transferred into the operating position thereof or into the non-operating position thereof, wherein a first actuator (16) is provided for pivoting the plough frame (2) in and out with the links (4, 5), and a second actuator (21) is provided for pivoting the plough frame (2) in relation to at least one link (4, 5), in that the first actuator (16) for pivoting the plough frame (2) in and out comprises two individual actuators (18, 19) which are actuable independently of each other, are mechanically coupled to each other and by means of which, in each case independently of each other, the overall length (L1, L1', L1") of the first actuator (16) for pivoting the plough frame (2) in and out can be changed, **characterized in that** the first actuator (16) for pivoting the plough frame (2) in and out has a common piston rod (20) which is assigned to the individual actuators (18, 19), which are coupled mechanically to each other, and which interacts with two actuating elements (18.1, 19.1), which are adjustable independently of each other, for changing the overall length (L1, L1', L1") of the first actuator (16).

2. Reversible plough according to Claim 1, **characterized in that** the first actuator (16) has double-action cylinders as individual actuators (18, 19) .

3. Reversible plough according to Claim 2, **characterized in that** the double-action cylinders are in the form of double-action hydraulic cylinders.

4. Reversible plough according to Claim 2 or 3, **characterized in that** the pistons of the double-action hydraulic cylinders are mechanically coupled to each other via the common piston rod (20).

5. Reversible plough according to Claim 1 and one of Claims 2 to 4, **characterized in that** the actuating elements (18.1, 19.1) of the individual actuators, which actuating elements are movable relative to the piston rod (20), are in the form of cylinder housings.

6. Reversible plough according to one of Claims 3 to 5, **characterized in that** the double-action hydraulic cylinders as individual actuators (18, 19) each have pressure chambers (18.2, 18.3; 19.2, 19.3) which extend on both sides of a piston element (20.1, 20.2) of the common piston rod (20) within the hydraulic cylinder and each have a pressure medium connection.

7. Reversible plough according to one of Claims 1 to 6, **characterized in that** one of the individual actuators (19) is coupled to the second actuator (21).

8. Reversible plough according to Claim 7, **characterized in that** one of the individual actuators (19) is hydraulically coupled to the second actuator (21) .

9. Reversible plough according to one of Claims 1 to 8, **characterized in that** one of the individual actuators (18) is provided for pivoting the plough frame (2) in and out and the other individual actuator (19) is provided for adjustment to a smaller or greater tractor track width of the plough frame (2).

10. Reversible plough according to Claim 9, **characterized in that** the individual actuator (19) provided for adjusting a smaller or greater tractor track width is coupled to the second actuator (21) in such a manner that a greater or a smaller operating width can be set by a joint adjustment of the second actuator (21) and of the individual actuator (19) which is coupled thereto.

11. Reversible plough according to one of Claims 1 to 10, **characterized in that** the individual actuators (18, 19) which are in the form of hydraulic cylinders and the second actuator (21) which is in the form of a hydraulic cylinder as double-action hydraulic cylinders in each case each have two pressure medium connections for the pressure chamber (18.1, 18.2, 19.1, 19.2), which pressure medium connections are controlled by pilot controlled nonreturn valves (DA1, DA2, DB1, DB2, DC1, DC2).

## Revendications

1. Charrue réversible (1) avec un châssis de charrue (2) appuyé de façon rotative et/ou pivotante au moyen de bielles (4, 5) et d'un bâti tournant (8) sur un support porté (11) pour l'attelage de la charrue réversible (1) à un tracteur agricole (12) et avec des rangées de socs de charrue (3) disposées sur des côtés opposés du châssis de charrue (2), de telle manière que par un mouvement de rotation et/ou de pivotement du châssis de charrue (2) l'une ou l'autre rangée de socs de charrue (3) puisse être amenée au choix dans sa position de service ou dans sa position hors service, dans laquelle il est prévu, pour ramener et déployer le châssis de charrue (2) avec les bielles (4, 5), un premier organe de réglage (16) et pour faire pivoter le châssis de charrue (2) par rapport à au moins une bielle (4, 5) un deuxième organe de réglage (21), en ce que le premier organe de réglage (16) pour ramener et déployer le châssis de charrue (2) comprend deux organes de réglage individuels (18, 19) mécaniquement couplés l'un à l'autre et actionnables indépendamment l'un de l'autre, par lesquels chaque fois indépendamment l'une de l'autre la longueur totale (L1, L1', L1") du premier organe de réglage (16) pour ramener et déployer le châssis de charrue (2) peut être changée, **caractérisée en ce que** le premier organe de réglage (16) pour ramener et déployer le châssis de charrue (2) présente une tige de piston commune (20) associée aux organes de réglage individuels (18, 19) mécaniquement couplés l'un à l'autre, qui coopère avec deux éléments de réglage (18.1, 19.1) réglables indépendamment l'un de l'autre pour le changement de la longueur totale (L1, L1', L1") du premier organe de réglage (16).

2. Charrue réversible selon la revendication 1, **caractérisée en ce que** le premier organe de réglage (16) présente des cylindres à double action comme organes de réglage individuels (18, 19).

3. Charrue réversible selon la revendication 2, **caractérisée en ce que** les cylindres à double action sont constitués par des vérins hydrauliques à double action.

4. Charrue réversible selon la revendication 2 ou 3, **caractérisée en ce que** les pistons des vérins hydrauliques à double action sont mécaniquement couplés l'un à l'autre au moyen de la tige de piston commune (20) .

5. Charrue réversible selon la revendication 1 et l'une quelconque des revendications 2 à 4, **caractérisée en ce que** les éléments de réglage (18.1, 19.1), mobiles par rapport à la tige de piston (20), des organes de réglage individuels sont réalisés sous forme de boîtier de cylindre.

6. Charrue réversible selon l'une quelconque des revendications 3 à 5, **caractérisée en ce que** les vérins hydrauliques à double action en tant qu'organes de réglage individuels (18, 19) présentent respectivement des chambres de pression (18.2, 18.3; 19.2, 19.3) s'étendant sur les deux côtés d'un élément de piston (20.1, 20.2) de la tige de piston commune (20) à l'intérieur du vérin hydraulique, qui comportent chacune un raccord de fluide sous pression.

7. Charrue réversible selon l'une quelconque des revendications 1 à 6, **caractérisée en ce qu'**un des organes de réglage individuels (19) est couplé au deuxième organe de réglage (21).

8. Charrue réversible selon la revendication 7, **caractérisée en ce qu'**un des organes de réglage individuels (19) est couplé hydrauliquement au deuxième organe de réglage (21).

9. Charrue réversible selon l'une quelconque des revendications 1 à 8, **caractérisée en ce qu'**un des organes de réglage individuels (18) est prévu pour ramener et déployer le châssis de charrue (2) et l'autre organe de réglage individuel (19) est prévu pour le réglage à une voie de tracteur plus étroite ou plus large du châssis de charrue (2).

10. Charrue réversible selon la revendication 9, **caractérisée en ce que** l'organe de réglage individuel (19) prévu pour le réglage d'une voie de tracteur plus étroite ou plus large est couplé au deuxième organe de réglage (21), de telle manière qu'une largeur de travail plus grande ou plus petite soit réglable par un déplacement commun du deuxième organe de réglage (21) et de l'organe de réglage individuel (19) couplé à celui-ci.

11. Charrue réversible selon l'une quelconque des revendications 1 à 10, **caractérisée en ce que** les organes de réglage individuels (18, 19) constitués par des vérins hydrauliques et le deuxième organe de réglage (21) constitué par un vérin hydraulique présentent chacun en tant que vérins hydrauliques respectivement à double action deux raccords de fluide sous pression pour la chambre de pression (18.1, 18.2, 19.1, 19.2), qui sont contrôlés par des clapets antiretour déblocables (DA1, DA2, DB1, DB2, DC1, DC2).
